# FASCICULE DE BREVET EUROPEEN

(11) **EP 1 440 780 B1**
(45) Date de publication et mention de la délivrance du brevet: **07.03.2007**
(21) Numéro de dépôt: 04290124.9
(22) Date de dépôt: 16.01.2004
(51) Int. Cl.: B29C 33/00, B29D 11/00, B29C 45/28, F16K 1/12, F16K 1/54

(54) **Vanne à pointeau pour le remplissage d'un moule avec une matière organique à l'état liquide et procédé de moulage d'un élément optique au moyen d'une telle vanne**
Nadelverschlussdüse zur Befüllung eines Werkzeuges mit einem flüssigen organischen Material sowie Verfahren zur Herstellung eines optischen Elements unter Verwendung einer solchen Düse
Needle valve for filling a mould with a liquid organic material and process for moulding an optical element using such a valve

(30) Priorité: 24.01.2003 FR 0300800
(43) Date de publication de la demande: 28.07.2004
(73) Titulaire: ESSILOR INTERNATIONAL (Compagnie Générale d'Optique), F-94220 Charenton-le-Pont (FR)
(72) Inventeur: Huard, Marc, 94140 Alfortville (FR)
(74) Mandataire: Lepelletier-Beaufond, François

(56) Documents cités:
- US-A- 3 180 360
- US-A- 4 474 356
- US-A- 5 662 839
- US-A- 5 695 793
- US-A- 6 060 005
- US-A1- 2002 050 664

## Description

La présente invention se rapporte de manière générale à la fabrication par moulage d'éléments optiques en matière organique, tels que des lentilles ophtalmiques correctrices et/ou solaires, des lentilles d'instruments ou des éléments d'optique de précision. Elle s'intéresse plus précisément au remplissage d'un moule avec la matière organique à l'état liquide et a pour objet une vanne destinée à commander ce remplissage.

Traditionnellement, le moulage d'un élément optique tel qu'une lentille ophtalmique se fait à l'aide d'un moule formé de deux coquilles de moulage à la périphérie desquelles est établi annulairement un élément de fermeture définissant avec elles la cavité de moulage recherchée. Après le remplissage de la cavité de moulage avec la matière à l'état liquide, l'initialisation de la polymérisation de cette matière est assurée par une source de chaleur ou de rayonnement.

Le document US 4474356 décrit une vanne à pointeau selon le préambule de la revendication 1.

Pour le remplissage du moule, la matière à mouler est introduite dans la cavité de moulage à la faveur d'une ouverture qui est dûment ménagée à cet effet à la périphérie des coquilles de moulage (en pratique, le plus souvent, dans l'élément de fermeture), de manière à ne pas interférer avec la zone optiquement utile de la lentille optique formée. Cette phase de remplissage s'opère au moyen d'un dispositif de remplissage apte à délivrer une dose déterminée de matière à mouler. Ce dispositif de remplissage comporte une buse d'introduction de la matière dans le moule, associée à l'ouverture de remplissage du moule. En amont de la buse, séparément ou d'un seul tenant avec celle-ci, est prévue une vanne dont la commande, de préférence automatisée, doit permettre un dosage précis de la quantité de matière délivrée au moule, à une cadence suffisante.

Typiquement, une séquence de remplissage de la cavité de moulage comporte les étapes suivantes :
- montée en débit par ouverture de la vanne, pour passer d'un débit nul à un débit nominal,
- remplissage plein débit, avec maintien du débit nominal,
- descente en débit par fermeture de la vanne, pour revenir du débit nominal au débit nul.

En raison notamment des vitesses de remplissage résultant des cadences de productions imposées par les impératifs économiques, l'expérience montre que les lentilles optiques obtenues dans ces conditions sont fréquemment l'objet de défauts optiques locaux plus ou moins importants, conduisant à des taux de rebut relativement élevés et/ou à une qualité optique médiocre de l'élément optique ainsi formé. Pour éviter l'apparition de ces défauts, on peut certes imposer un remplissage très lent et/ou un temps de latence relativement important (de l'ordre d'une à deux heures) entre le remplissage et l'initialisation de la polymérisation ; mais bien entendu cette solution se heurte directement aux impératifs de cadences de production déjà évoqués. Plus efficacement, il a été proposé d'adopter, lors du remplissage une configuration particulière du moule, lequel est disposé verticalement, avec son ouverture de remplissage située en partie basse. Toutefois, même avec une telle configuration de remplissage, des défauts peuvent subsister selon la matière utilisée et surtout les cadences souhaitées.

Les efforts d'investigation de la demanderesse l'ont amenée à en rechercher une explication dans le dispositif de remplissage lui-même. Celui-ci possède en effet une canalisation intérieure plus ou moins accidentée, à l'intérieur de laquelle la matière à mouler subit, au moins dans une certaine mesure, certaines perturbations d'écoulement qui, eu égard à la vitesse de remplissage et à la viscosité de la matière à mouler, s'opposent à un écoulement laminaire et engendrent, sans que le processus soit bien maîtrisé, l'apparition de microbulles. En particulier, la partie de la cavité de moulage située autour de l'ouverture de remplissage présente des irrégularités, résultant notamment de la présence du nez de la buse de remplissage qui débouche à cet endroit dans le moule. Ces irrégularités de surface de la cavité de moulage risquent de créer des irrégularités d'écoulement engendrant l'apparition de microbulles. De plus, selon la manière dont le remplissage et sa commande sont effectués, la matière peut subir des irrégularités de débit, voire des à-coups. Eu égard, conjointement, au fait que cette matière à mouler est un mélange de constituants susceptibles de présenter des indices de réfraction et/ou des coefficients de viscosité différents, il peut en résulter, par cisaillage ou étirement, l'apparition de gradients d'indices locaux relativement importants, qui, si la polymérisation intervient trop rapidement après le remplissage, ne manquent pas de conduire à d'autres défauts optiques tels que l'effet de "sirop" bien connu des verriers. Dans ce contexte, la vanne peut apparaître comme un organe particulièrement sensible dans la mesure où, pour exercer ses fonctions d'ouverture, de fermeture et de réglage de débit, elle opère des variations de la section d'écoulement, génératrices de turbulences ou de phénomènes de cavitation ou analogue entraînant des défauts optiques de l'élément optique finalement obtenu.

Partant de ce constat, l'invention propose une vanne préservant l'intégrité optique de la matière à mouler lors de son écoulement, y compris à l'ouverture et à la fermeture.

On prévoit donc selon l'invention une vanne à pointeau pour le remplissage d'un moule avec une matière synthétique comportant :
- un corps dans lequel est ménagé un canal d'écoulement de la matière à mouler, présentant une ouverture d'entrée, une ouverture de sortie et, entre ces deux ouvertures, un rétrécissement bordé en amont par un décrochement formant siège, et
- un pointeau monté dans le corps pour être mobile entre une position de pleine ouverture et une position de fermeture du canal d'écoulement, avec, entre ces deux positions extrêmes, une plage de positions intermédiaires d'ouverture variable, ledit pointeau possédant un épaulement de fermeture agencé pour prendre appui, en position de fermeture, contre le siège formé par le décrochement du canal d'écoulement dans le corps, de manière à obturer le canal d'écoulement, caractérisé en ce que ledit pointeau possède en saillie de cet épaulement de fermeture, un nez de réglage d'ouverture qui présente une section non uniforme et qui est engagé dans le rétrécissement pour définir avec celui-ci, dans chaque position intermédiaire du pointeau, une certaine section d'écoulement.

On peut ainsi effectuer un réglage de débit en douceur, sans à-coup. La fermeture complète de la vanne est assurée par un contact circulaire quasi-linéaire entre l'épaulement de fermeture du pointeau et le siège du corps, et non par un contact surfacique entre le nez du pointeau lui-même et la surface intérieure du corps. Un tel contact surfacique créerait en effet un aplatissement avec surpression et cisaillement local de la matière, favorisant l'apparition de microbulles ou d'effets de sirop principalement lors de l'ouverture de la vanne.

Dans un mode de réalisation particulièrement avantageux, l'épaulement de fermeture du pointeau est émoussé et le décrochement du canal d'écoulement est conique.

L'invention a aussi pour objet un procédé de moulage d'un élément optique en matière organique dans une cavité de moulage appropriée, comportant une séquence de remplissage de la cavité de moulage avec de la matière organique à l'état liquide et une étape de polymérisation de la matière dans ladite cavité de moulage, procédé dans lequel la séquence de remplissage de la cavité de moulage s'opère au moyen d'une vanne selon l'invention. Pour exécuter la séquence voulue, le pointeau de la vanne peut être commandé en vitesse ou en position.

Avantageusement, la séquence de remplissage de la cavité de moulage comporte les étapes suivantes :
- montée en débit, pour passer d'un débit nul à un débit nominal supérieur à 40 g/min,
- remplissage plein débit, avec maintien du débit nominal,
- descente en débit, pour revenir du débit nominal au débit nul,
et l'étape de montée en débit se décompose en au moins deux phases :
- début de remplissage à bas débit, jusqu'au remplissage du moule à une hauteur de matière d'au moins 2 mm au point le plus profond du moule, le débit étant au cours de cette phase croissant pour atteindre un maximum, dit débit de début de remplissage, inférieur à 20 g/min, puis
- montée principale en débit pour passer du débit de début de remplissage au débit nominal.

On commence ainsi, avec la phase de début de remplissage bas débit, à remplir lentement la cavité de moulage, de manière à "mouiller" avec la matière à mouler le fond du moule jusqu'à ce qu'un certain volume minimum de matière y soit introduit. Car c'est bien le début du remplissage du moule qui semble s'avérer le plus critique. Grâce à la lenteur de l'écoulement lors de ce début de remplissage, le faible volume de matière ainsi initialement introduit reste exempt de microbulles ou tout au moins, en cas d'apparition de quelques microbulles, libère celles-ci aisément du fait même de sa faible hauteur. Au-delà de la hauteur minimum de matière prévue, le remplissage peut être accéléré sans risque de turbulence, car d'une part le volume de matière déjà introduit exerce une fonction d'amortisseur fluide et d'autre part la vitesse de progression de la surface libre de la matière dans le moule est moindre à débit constant, la cavité de moulage s'élargissant.

Avantageusement encore, la matière est introduite dans la cavité de moulage par un orifice situé en partie basse de ladite cavité et la polymérisation de la matière est initiée immédiatement après le remplissage. On réduit ainsi les temps de cycles tout en préservant la qualité optique de la lentille moulée. De plus, il est alors particulièrement avantageux de combiner ce mode de remplissage par le bas avec la caractéristique consistant à débuter le remplissage à bas débit. Cette phase de début de remplissage lent permet en effet de "mouiller" en douceur la partie basse de la cavité de mouillage qui est précisément celle dans laquelle se trouve l'ouverture de remplissage et en particulier le nez de la buse de remplissage. On évite aussi tout effet de jet (par analogie à un jet d'eau, toutes proportions gardées) qui résulterait d'un début de remplissage trop rapide.

Il sera fait référence aux dessins en annexe, parmi lesquels :
- la figure 1 est une vue en perspective d'un dispositif de moulage d'une lentille ophtalmique intégrant une vanne conforme à l'invention ;
- la figure 2 est une vue en coupe axiale du dispositif de la figure 1 ;
- la figure 3 est une vue de détail agrandie de la zone II de la figure 1 ;
- la figure 4 est une vue analogue à la figure 2, illustrant la configuration de pleine ouverture de la vanne ;
- la figure 5 est une vue analogue à la figure 2, illustrant la la configuration de fermeture de la vanne ;
- la figure 6 est un graphe représentant la fonction de correspondance entre la position axiale du pointeau de la vanne et le débit délivré par la vanne dans des conditions spécifiques ;
- la figure 7 est un graphe représentant un exemple de séquence de remplissage du moule, exécuté au moyen de la vanne des figures 1 à 6 ;
- la figure 8 est une vue de profil du pointeau de la vanne, seul, selon une variante d'exécution ;
- la figure 9 est un graphe représentant un second exemple de séquence de remplissage du moule, exécuté au moyen d'une vanne équipée du pointeau de la figure 8.

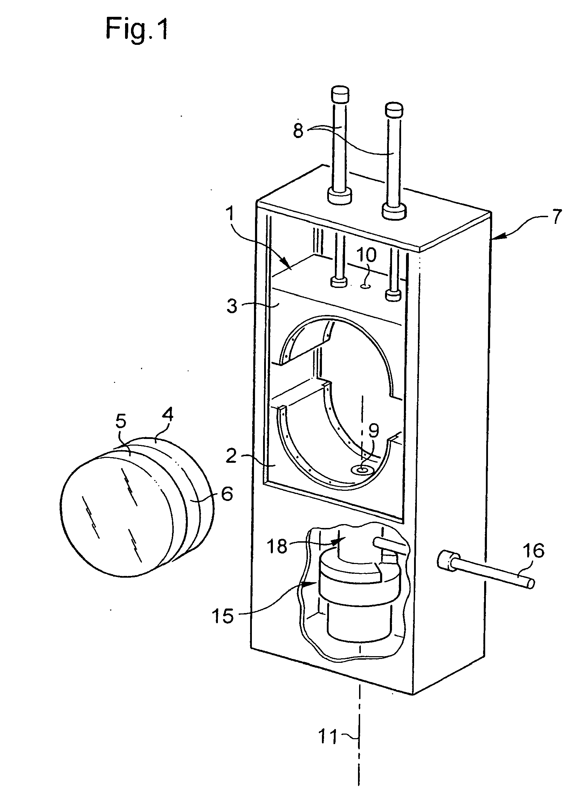

La figure 1 représente un dispositif de moulage d'un élément optique en matière synthétique tel qu'une lentille ophtalmique destinée à équiper une paire de lunettes correctrices ou solaires. Ce dispositif de moulage se compose globalement de deux parties : un moule 1 renfermant la cavité de moulage définissant la lentille à mouler et un dispositif de remplissage 15.

Le moule 1 ne relève pas dans ses détails de la présente invention et il ne sera donc que sommairement décrit. On pourra d'ailleurs, dans le cadre de la présente invention, utiliser n'importe quelle sorte de moule, avec le procédé de moulage correspondant. On pourra ainsi, par exemple, utiliser des moules et procédé du type de ceux décrits dans les documents EP 0715946, US 4190621 et US 5110514, dont les descriptions de moule et de procédé de moulage sont incorporées à la présente description.

Dans l'exemple illustré, le moule 1 est du type décrit dans le document EP 0715946. Il comporte deux mors 2, 3 présentant chacun une surface intérieure hémicylindrique complémentaire de l'autre et enserrant deux coquilles de moulage 4, 5 disposées de chant, suivant un plan vertical. Les deux coquilles 4, 5 définissent entre elles la cavité de moulage 6 souhaitée. Les deux mors 2, 3 sont portés par un bâti 7 et le mors supérieur 3 est mobile en translation verticale sous la commande de vérins 8. Le mors inférieur 2 possède un orifice de coulée 9 situé à la partie basse de la cavité de moulage 6, et, préférentiellement, au point le plus bas de celle-ci. Autrement dit, en l'espèce, l'orifice de coulée 9 débouche sur la génératrice la plus basse de la surface intérieure du mors 2 ; il est agencé suivant un axe de coulée 11 vertical. Le mors supérieur 3 présente lui-même un évent 10 de même axe vertical 11 situé en partie haute et débouchant préférentiellement sur la génératrice la plus haute de la surface intérieure du mors 3.

En dessous du mors inférieur 2 est installé le dispositif de remplissage 15 de la cavité de moulage. Il s'agit globalement pour ce dispositif d'assurer le remplissage de la cavité de moulage avec la quantité souhaitée de matière synthétique, sans engendrer ni microbulles ni effet de sirop, en vue de l'obtention d'un élément moulé de bonne qualité optique.

Le dispositif de remplissage 15 est relié par un conduit 16 à des moyens d'alimentation (non représentés) aptes à assurer une alimentation continue de la cavité de moulage en matière à mouler. Par alimentation continue, on entend ici une alimentation à pression sensiblement constante, dépourvue de tout à-coup. Ces moyens d'alimentation comportent par exemple une source de pression disposée en amont d'un réservoir qui, formant nourrice, contient la matière à mouler et qui, par le conduit 16, est relié au dispositif de remplissage. Par exemple, la source de pression est un réservoir d'air comprimé qui, sous le contrôle d'un régulateur, est relié au réservoir, au-dessus de la matière à mouler contenue dans celui-ci.

La matière à mouler peut, au choix, être une composition au moins en partie polymérisable par insolation, et, par exemple, par rayonnement ultraviolet, ou être une composition au moins en partie polymérisable à la chaleur, ou, encore, être une composition qui est à la fois polymérisable par insolation et polymérisable à la chaleur.

Le dispositif de remplissage 15 comporte deux composants principaux agencés suivant l'axe de coulée 11 : une buse 17 et une vanne à pointeau 18.

La buse 17 est globalement de révolution autour de l'axe de coulée 11 et est extérieurement étagée en trois tronçons, avec un plateau de fixation 19, un corps cylindrique ou parallélépipédique 20 reçu dans un logement correspondant du mors inférieur 4 du moule, et un embout 21 traversant un perçage correspondant du mors inférieur 4 pour déboucher en affleurement sur la face intérieure de ce mors. Intérieurement, la buse 17 comporte un canal intérieur traversant 22 d'axe 11 qui, à son extrémité supérieure, débouche dans la cavité de moulage 6 pour former l'orifice de coulée 9 mentionnée précédemment.

En dessous de la buse 17, c'est-à-dire en amont de celle-ci par référence au sens d'écoulement de la matière à mouler, est montée la vanne 18. Cette vanne comporte un corps 25 globalement de révolution autour de l'axe de coulée 11, pourvue d'une collerette supérieure de fixation 26 plaquée contre le plateau de fixation 19 de la buse 17 au moyen de vis 28 qui, traversant la collerette 26 et le plateau 19, sont engagées dans des taraudages correspondants du mors 4 pour fixer au mors 4 à la fois la buse 17 et le corps 25 de la vanne 18.

Un canal 30 d'écoulement de la matière à mouler est ménagé à l'intérieur du corps 25 de la vanne 18. Ce canal présente une ouverture d'entrée 31, une ouverture de sortie 32 et, entre ces deux ouvertures, un rétrécissement 33 bordé sur son flanc amont par un décrochement 34 formant siège comme cela sera mieux expliqué ultérieurement.

Le canal d'écoulement 30 présente ici une forme de L, ayant une première branche, verticale, de révolution autour de l'axe d'écoulement 11 et dont l'extrémité libre constitue l'ouverture de sortie 32, et une seconde branche, horizontale, de révolution autour d'un axe 35 perpendiculaire à l'axe d'écoulement 11. Cette seconde branche peut aussi ne pas être perpendiculaire à l'axe 11

La première branche du canal 30 est étagée, avec une base large 36 et, en extrémité, le rétrécissement 33 suivi de l'ouverture de sortie 32. La base 36 et le rétrécissement 33 sont cylindriques. Le rétrécissement 33 possède un diamètre égal à celui de l'ouverture de sortie 32 qui en forme par conséquent le prolongement. La transition entre la base large 36 et le rétrécissement 33 est réalisée par le décrochement 34 qui est de forme conique et qui se raccorde au rétrécissement 33 et à la base 36 par des zones de liaison émoussées, c'est-à-dire non anguleuses. Cette uniformité de section en aval du décrochement 34 et la douceur de la transition de diamètre résultant de la conicité du décrochement 34 et de l'absence de zone anguleuse permettent d'éviter ou tout au moins limiter pour leur plus grande part les turbulences d'écoulement. Pour le décrochement conique 34, on choisira de préférence un angle au sommet compris entre 30 et 60 degrés. Il n'est toutefois pas indispensable que le décrochement 34 soit rigoureusement conique. Il pourra même être intéressant de réaliser ce décrochement sous la forme d'une surface de révolution de section axiale courbée, par exemple proche d'une surface torique ou même plus complexe avec une section axiale ondulée pour un raccordement en douceur avec la base large 36 et le rétrécissement 33.

De même, en aval de l'ouverture de sortie 32, le canal intérieur 22 de la buse 17 est, au moins dans sa partie qui jouxte l'ouverture de sortie 32, de forme cylindrique de même diamètre que ladite ouverture de sortie 32. L'écoulement de la matière à mouler ne rencontre donc aucune irrégularité entre la vanne 18 et la buse 17.

La seconde branche du canal d'écoulement 30 se réduit quant à elle à l'ouverture d'entrée 31 qui débouche directement à la base de la première branche. En amont (par rapport au sens de l'écoulement), l'ouverture d'entrée 31 débouche dans un logement taraudé 37 destiné à recevoir un embout de raccordement fileté du conduit 16.

Dans l'exemple envisagé, les dimensions du canal d'écoulement 30 de la vanne 18 sont les suivantes :
- le diamètre de l'ouverture d'entrée 31 est de 5 mm ;
- le diamètre de la base 36 de la première branche du canal d'écoulement 30 est de 10 mm ;
- le diamètre commun, de l'ouverture de sortie 32 et du rétrécissement 33 (et du canal 22 de la buse 17) est de 5 mm ;
- l'angle au sommet du décrochement conique 34 est de 45 degrés.

Ces dimensions sont données à 20% près.

La vanne 18 comporte par ailleurs un pointeau 40 monté dans le corps 25 pour être mobile entre une position de pleine ouverture autorisant un débit maximum et une position de fermeture obturant le canal d'écoulement 30, avec, entre ces deux position extrêmes, une plage de positions intermédiaires sur laquelle le débit autorisé par la vanne 18 varie.

Ce pointeau 40 présente un axe de symétrie de révolution et est monté dans le corps 25 pour coulisser suivant son axe qui se confond avec l'axe d'écoulement 11. Plus précisément, le pointeau 40 comporte une embase allongée 41 de surface extérieure cylindrique d'axe 11 et un nez 42 allongé suivant l'axe 11, exerçant, en coopération avec le rétrécissement 33 du canal d'écoulement 30, une fonction de réglage de débit et présentant à cet effet une section non uniforme sur toute sa longueur, comme cela sera mieux expliqué ultérieurement.

L'embase allongée cylindrique 41 est reçue à coulissement dans un alésage traversant 45 ménagé dans le corps 25 suivant l'axe 11. Un joint torique d'étanchéité 44 en un élastomère du type Ethylène-Propylène-Diène est monté entre le corps 25 et l'embase cylindrique 41 du pointeau.

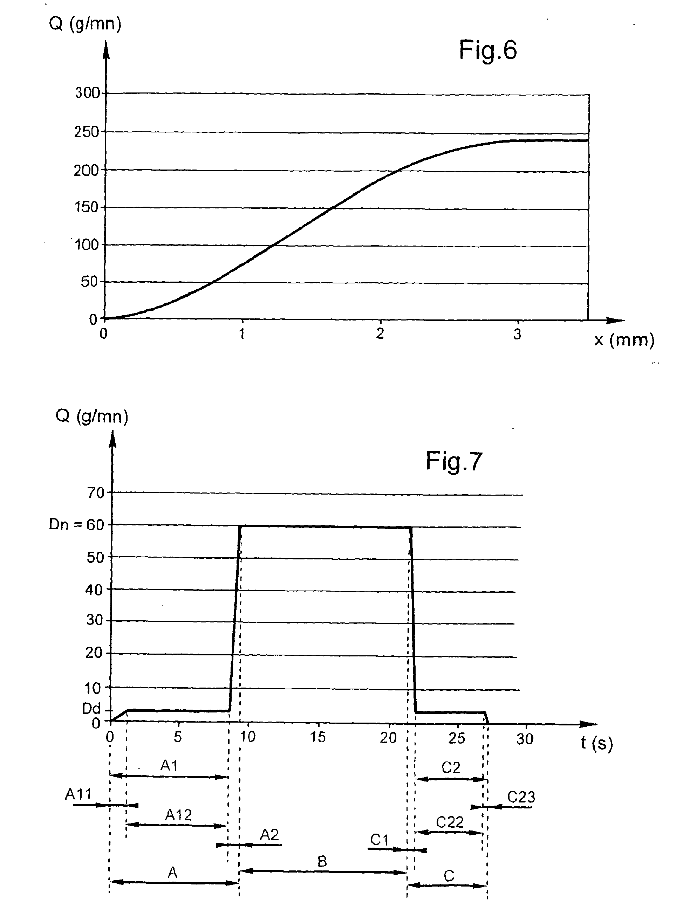

Dans l'exemple illustré aux figures 1 à 5, le nez 42 présente une surface extérieure conique permettant d'établir, à pression d'admission constante de la matière à mouler, une fonction de correspondance entre la position axiale du pointeau 40 et le débit délivré par la vanne 18. En effet, dans les positions intermédiaires du pointeau 40, le nez conique 42 du pointeau 41 est engagé dans le rétrécissement 33 du canal d'écoulement 30 et l'on comprend que, du degré d'enfoncement du nez 42 dans le rétrécissement 33, dépend la section d'écoulement laissée libre pour la matière à mouler entre ledit nez et le rétrécissement 33. Pour une pression d'admission donnée de la matière à mouler, le débit autorisé par la vanne 18 peut donc être réglé en ajustant la position du pointeau 40 le long de son axe 11. Un exemple de cette fonction de correspondance, pour une pression d'alimentation de 0,3 bar et une matière ayant une viscosité de 200 cps (centipoises), est donné à la figure 6 qui montre la courbe de débit de matière, notée Q et donnée en ordonnée en g/min, en fonction de la position axiale du pointeau 41, notée x et figurant en abscisse en mm. La position axiale du pointeau 41 est repérée à partir de sa position de fermeture, origine des abscisses, et s'étend jusqu'à sa position d'ouverture maximum qui est ici située à 3,5 mm de sa position de fermeture où le débit atteint près de 250 g/min.

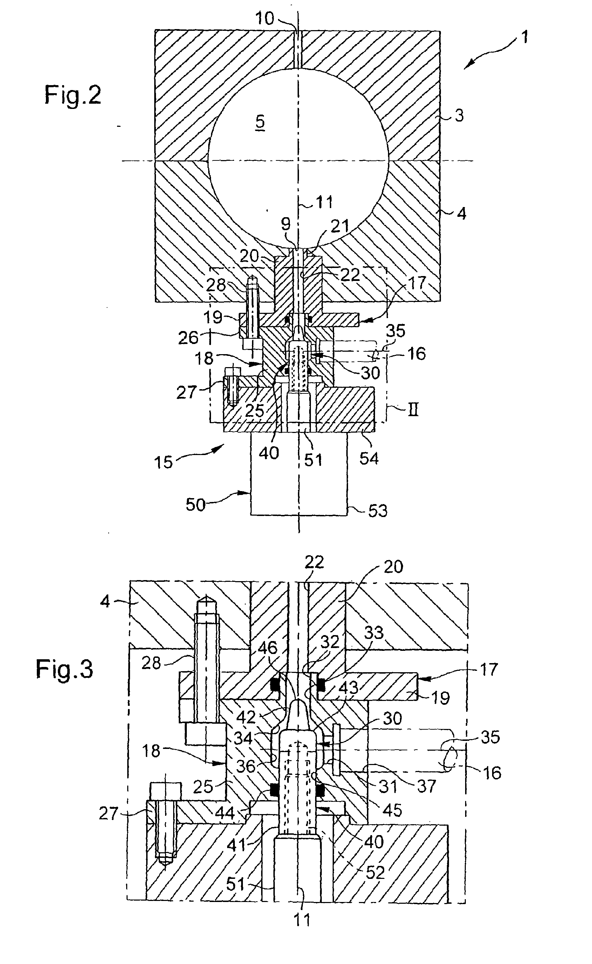

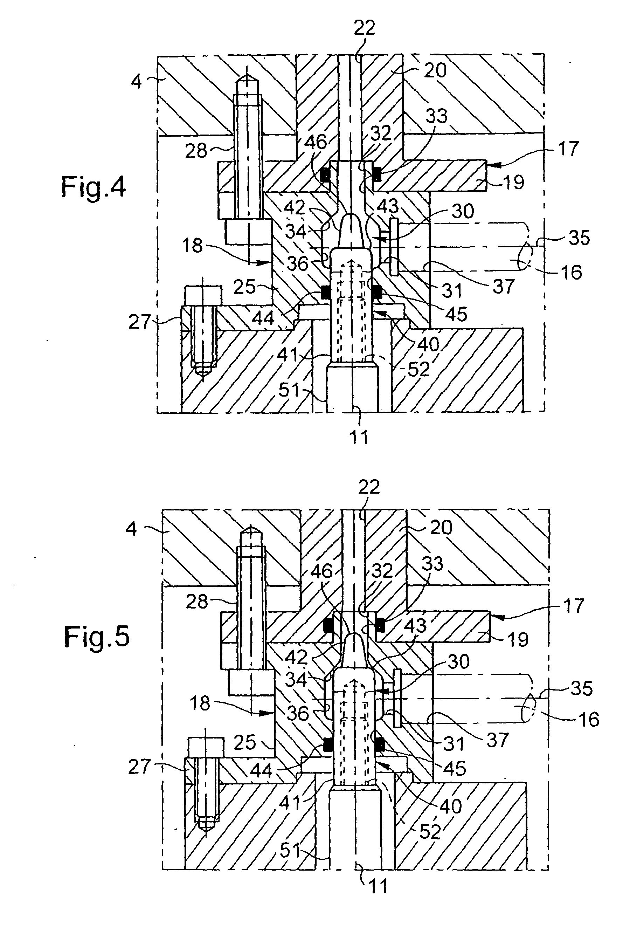

Par ailleurs, le nez 42 possède une extrémité libre 46 qui est émoussée et plus précisément, en l'espèce, sphérique. Cette configuration émoussée de l'extrémité du nez 42 permet d'éviter ou au moins limiter les turbulences lors de l'écoulement. En effet, comme on peut le constater aux figures 3 et 4, l'extrémité du nez 42 est, lors de l'écoulement en position d'ouverture partielle, engagée dans le rétrécissement 33. De même, en position d'ouverture maximum (figure 4) dans laquelle la vitesse d'écoulement est la plus élevée, l'extrémité 46 du nez 42 est au seuil ou même légèrement engagée dans le rétrécissement 33. Il est en effet avantageux de limiter la course du pointeau pour une meilleure réactivité et, surtout, réduire autant que possible les effets de pompage et de cisaillement exercés sur la matière par le pointeau lors de son déplacement.

Entre son nez 42 et son embase allongée 41, le pointeau 40 possède extérieurement un épaulement de fermeture 43 agencé pour prendre appui, en position de fermeture, contre le décrochement 34 de la première branche du canal d'écoulement 30. C'est ainsi que, dans sa fonction d'obturation du canal d'écoulement 30 qu'il exerce en coopération avec l'épaulement 43 du pointeau 40, le décrochement 34 forme un siège pour cet épaulement.

L'épaulement de fermeture 43 du pointeau est émoussé et présente plus précisément une forme torique.

Dans l'exemple envisagé, les dimensions extérieures du pointeau 40 sont les suivantes :
- le diamètre de l'embase allongée 41 est de 8 mm ;
- le nez conique 42 possède un angle au sommet de 12,4 degrés, avec, à sa jonction avec l'embase 41, un grand diamètre de 4,7 mm ;
- le rayon de l'extrémité libre 46 est de 2 mm ;
- le rayon de l'épaulement torique 43 est de 2 mm.

Ces dimensions sont données à 20% près.

Pour éviter les risques de "gommage", c'est-à-dire de grippage du pointeau dans l'alésage 45 du corps de vanne 25 suite à un dépôt de très fines couches de matière sur la surface du pointeau et/ou de l'alésage 45, les surfaces intérieures du canal d'écoulement 30 et de l'alésage 45 du corps et au moins la partie de la surface extérieure du pointeau 40 qui est amenée à être plongée dans le canal d'écoulement 30, au contact de la matière, sont en Polytetrafluoroéthylène. Dans l'exemple envisagé, le pointeau 40 est intégralement réalisé en Polytetrafluoroéthylène, tandis que le corps 25 est en métal revêtu intérieurement de Polytetrafluoroéthylène ou analogue (le choix du type de revêtement pour l'intérieur du corps de vanne dépendant du métal utilisé pour sa fabrication).

La position axiale du pointeau 40 est commandée par un vérin double effet 50 dont la tige mobile 51 d'axe 11 est pourvue à son extrémité libre d'une tige filetée 52 engagée dans un perçage taraudé axial de l'embase allongée 41 du pointeau 40. Le corps 53 du vérin 50 est fixé sur une entretoise 54 elle-même fixée sur la collerette de fixation 27 du corps 25 de la vanne 18. L'entretoise 54 est percée en son centre, suivant l'axe 11, pour permettre le passage libre de la tige 51 du vérin 50.

Le vérin 50 peut être du type à commande de position ou à commande de vitesse de translation de sa tige et, partant, du pointeau 40.

Dans l'exemple illustré par les figures 2 à 5, le vérin est du type à commande de position : il permet, à l'aide d'une unité de commande associée classique (non représentée), de contrôler avec précision la position linéaire de la tige 51 et du pointeau 40 le long de l'axe 11. Il s'agit typiquement d'un vérin à moteur pas à pas tel que celui commercialisé par la société TAA Magnetic sous la marque HSI® et portant la référence HSI 46441-05-M3. On utilisera ce type de vérin pour ses qualités de précision et de flexibilité, dans les cas de séquences de coulée complexes impliquant des variations du débit de matière entre plusieurs valeurs définies avec précision en fonction de paramètres ad hoc tels que le volume total à remplir ou la géométrie de la cavité à remplir.

Le cas où le vérin est du type à commande de vitesse sera développé ultérieurement, conjointement à la description d'une variante de réalisation du pointeau.

La forme globalement conique du nez du pointeau illustrée par les figures 2 à 5, bien qu'avantageuse dans le cadre développé ci-dessus, n'est pas limitative et, en variante, le nez du pointeau peut revêtir une forme autre que conique. Il peut en particulier posséder plusieurs tronçons de formes distinctes, sans discontinuité au moins au premier ordre entre ces différents tronçons.

En service, le moulage d'un élément optique en matière organique s'opère en introduisant dans la cavité de moulage 6 la matière à l'état liquide, puis en polymérisant cette matière dans la cavité de moulage 6. Après durcissement suffisant, la lentille est éjectée du moule.

Pour le remplissage du moule 1, la matière à mouler est introduite dans la cavité de moulage à la faveur de l'orifice de coulée 9, sous la commande de la vanne 15.

L'ouverture d'entrée 31 étant reliée par le conduit 16 à une source de matière à mouler sous pression constante, il suffit d'ouvrir plus ou moins la vanne 18 pour avoir le débit recherché pour la matière à mouler et assurer un remplissage progressif, par le bas, de la cavité de moulage 6 du moule 1.

Il suffit pour vaincre la gravité, de mettre en oeuvre des moyens d'alimentation propres à assurer la circulation de la matière à mouler sans cependant mettre réellement celle-ci sous pression.

Avec un vérin du type du vérin 50 à commande de position linéaire tel que décrit précédemment en référence aux figures 1 à 5, il est possible de réaliser une séquence de remplissage à contrôle précis telle celle définie par la figure 7. Il s'agit du remplissage par le bas de la cavité de moulage en vue du moulage d'une lentille directement finie. Cette séquence est donnée pour une pression d'alimentation de 0,07 bar et une matière ayant une viscosité de 200 cps. Sur cette figure, on a représenté la fonction Q(t) donnant le débit de matière Q entrant dans la cavité de moulage, exprimé en grammes par minute, en fonction du temps t, exprimé en secondes. Pour le détail de la loi de variation du débit en fonction du temps Q(t), il est renvoyé à la figure 7.

Cette séquence de remplissage comporte trois étapes principales : une étape de montée en débit A, une étape de remplissage plein débit B et une étape de descente en débit C. Comme exposé en détail ci-dessous, l'étape de montée en débit A et l'étape de descente en débit C se divisent chacune en trois phases, tandis que l'étape de remplissage plein débit est à débit constant.

### Etape A : montée en débit.

La séquence de remplissage débute bien entendu par une montée en débit au cours de laquelle le débit de matière entrant dans la cavité de moulage passe globalement de zéro à un débit nominal prédéterminé Dn. En pratique, cette étape est réalisée par l'ouverture de la vanne, avec recul progressif du pointeau de sa position initiale de fermeture vers sa position d'ouverture. Cette ouverture qui engendre une montée en débit, délicate en ce qu'elle se révèle bien souvent à l'origine des défauts optiques précités, se divise en deux phases afin précisément d'éviter l'apparition de tels défauts : une phase de début de remplissage bas débit A1, et une phase de montée principale en débit A2. La phase de début de remplissage bas débit A1 est croissante, non strictement, avec un palier à débit constant. Elle se divise ainsi en deux sous-phases : une phase de montée préliminaire en débit A11 et une phase de palier de début de remplissage bas débit A12. L'étape A de montée en débit comporte donc au total trois phases.

### Phase A11 : montée préliminaire en débit

On débute par la phase de montée préliminaire en débit notée A11 à la figure 7 au cours de laquelle le débit passe de sa valeur initiale nulle à une valeur prédéterminée relativement faible que nous appellerons débit de début de remplissage Dd.

Pour obtenir cette première montée en débit, on procède en pratique à une ouverture partielle de la vanne. Le pointeau 40 est tiré par la tige 51 du vérin 50 à partir de sa position initiale de fermeture dans laquelle l'épaulement 43 est en appui contre le décrochement 34 de la première branche du canal d'écoulement 30, jusqu'à une position voisine de relativement faible ouverture. Le remplissage débute dès que le pointeau quitte sa position de fermeture.

Dans l'exemple donné à la figure 7, le débit Dd est de 3 g/min et la phase de montée préliminaire en débit dure 1,2 s. En l'espèce, la courbe de débit au cours de cette phase est quasiment linéaire. La vitesse de montée en débit (dérivée première du débit par rapport au temps, correspondant à la pente de la courbe de débit) au cours de cette montée préliminaire en débit est donc de 15 g.min⁻². Cette montée préliminaire en débit n'est cependant pas nécessairement linéaire et d'autres allures de courbe de montée en débit pourront être prévues pour cette phase, avec notamment une continuité de débit au second ordre par rapport au temps en début et en fin de phase. De manière générale, quelle que soit l'allure de la courbe de montée préliminaire en débit, on pourra envisager des vitesses de montée en débit comprises entre 0 et 500 g.min⁻² et de préférence inférieures à 200 g.min⁻².

### Phase A12 : palier de début de remplissage bas débit

Après la montée préliminaire en débit A11, le débit de matière atteint un palier, noté A12 à la figure 7, au cours duquel le débit est maintenu constant à sa valeur de débit de début de remplissage Dn pendant une durée prédéterminée de quelques secondes. A cet effet, le pointeau 40 de la vanne est maintenu immobile dans sa position de faible ouverture définissant le débit de début de remplissage Dd voulu.

Le débit Dd est très sensiblement inférieur au débit nominal Dn défini ci-dessous en liaison avec la phase de remplissage plein débit B. Pour éviter toute turbulence, il est préférable que le débit de début de remplissage Dd reste inférieur à 20 g/min. En pratique, ce débit de début de remplissage Dd pourra être compris entre 3 et 8 g/min. Dans l'exemple envisagé à la figure 7, il est de 3 g/min.

La durée de la phase de début de remplissage bas débit A1 dépend du débit Dd et du volume de matière que l'on souhaite ainsi introduire en douceur dans la cavité de moulage pour amorcer le remplissage. La phase de remplissage bas débit dure jusqu'à ce que la cavité de moulage du moule soit remplie à une hauteur prédéterminée, mesurée entre le point le plus profond de la cavité de moulage et la surface libre de la matière à mouler au droit de ce point. Cette hauteur dépend de chaque cas d'espèce et en particulier de la matière à mouler et de la configuration du moule. En tout état de cause, on a pu déterminer aux essais qu'une hauteur minimum de 2 mm est nécessaire.

En revanche, le remplissage bas débit entraînant une augmentation sensible de la durée globale de la séquence de remplissage, il est préférable de stopper le remplissage bas débit dès que possible. Il semble ainsi préférable que la hauteur de matière marquant la fin du début de remplissage bas débit reste inférieure à 12 mm. Dans la plupart des cas testés, une hauteur de matière comprise entre 5 et 10 mm apparaît comme un bon compromis. Dans le cas d'espèce présenté une hauteur de 7 mm a été retenue.

En pratique, dans le cas où la phase de remplissage bas débit A comporte un palier A12, comme dans l'exemple illustré par la figure 7, on pourra avantageusement prévoir une durée située entre 4 et 10 secondes. En l'espèce illustrée par la figure 7, la durée de la phase A12 est de 7 s.

On permet ainsi au remplissage de s'amorcer en douceur avec un écoulement de matière lent. Le faible volume de matière ainsi initialement introduit reste exempt de microbulles ou tout au moins, en cas d'apparition de quelques microbulles, libère celles-ci aisément du fait même de sa faible épaisseur. Comme la matière est introduite dans la cavité de moulage par un orifice situé en partie basse de ladite cavité, cette phase de début de remplissage lent permet de "mouiller" en douceur la partie basse de la cavité de mouillage qui est précisément celle dans laquelle se trouve l'ouverture de remplissage et en particulier le nez de la buse de remplissage. On évite aussi tout effet de jet (par analogie à un jet d'eau, toutes proportions gardées) qui résulterait d'un début de remplissage trop rapide et qui engendrerait inévitablement l'emprisonnement de bulles d'air dans la matière à mouler.

### Phase A2 : montée principale en débit

Lorsque le fond de la cavité de moulage est suffisamment rempli, on procède à une montée principale en débit, notée A2 à la figure 7. Cette seconde montée en débit est beaucoup plus forte que la première A11. Le débit passe en effet du débit de début de remplissage, qui doit rester faible pour les raisons évoquées ci-dessus, au débit nominal qui doit être aussi élevé que possible pour réduire les temps de cycle. Dans l'exemple donné à la figure 7, le débit nominal Dn est de 60 g/min. La durée de cette montée principale en débit est de 1 s et la courbe de débit au cours de cette phase est quasiment linéaire. La vitesse de montée en débit (dérivée première du débit par rapport au temps, correspondant à la pente de la courbe de débit, c'est-à-dire à l'accélération du débit) au cours de cette phase A2 est donc de 3000 g.min⁻² environ. Cette montée principale en débit n'est cependant pas nécessairement linéaire et d'autres allures de courbe de montée en débit pourront être prévues pour cette phase, avec notamment une continuité de débit au second ordre par rapport au temps en début et en fin de phase. De manière générale, quelle que soit l'allure de la courbe de montée principale en débit, on pourra envisager des vitesses de montée en débit comprises entre 2000 et 7000 g.min⁻², voire davantage.

En pratique, au cours de cette phase, le pointeau 40 est tiré par la tige 51 du vérin 50 jusqu'à sa position d'ouverture maximum. La section d'ouverture et donc le débit varient, tout au long de cette phase, suivant une loi définie par la variation de position linéaire du pointeau en relation avec la forme du profil du nez 42 du pointeau 40.

### Etape B : remplissage plein débit

Le débit nominal (maximum) étant ainsi atteint, le remplissage se poursuit à plein débit. C'est l'étape de remplissage à plein débit, notée B à la figure 7. Cette phase de remplissage rapide participe du soucis de réduire autant que possible les temps de cycle. Mais elle n'engendre pas pour autant de turbulences néfastes, dans la mesure où celles-ci sont évitées du fait de la présence dans le fond de la cavité de moulage du volume de matière liquide qui a été précautionneusement introduit lors de la phase de remplissage bas débit A12 et qui exerce désormais une fonction d'amortissement fluide. Le débit nominal ne doit cependant pas excéder une certaine limite, au-delà de laquelle l'amortissement fluide ne serait plus efficace et des risques de turbulence réapparaîtraient.

Un compromis doit donc être recherché pour ce débit nominal qui doit être aussi élevé que possible pour réduire les temps de cycle, sans pour autant engendrer des turbulence d'écoulement qui ne manqueraient pas d'affecter l'intégrité optique de la matière. On pourra ainsi prévoir un débit nominal Dn compris entre 50 et 300 g/min. Dans l'exemple illustré par la figure 7, le débit nominal Dn est de 60 g/min.

En pratique, au cours de cette étape, le pointeau 40 est maintenu immobile dans sa position d'ouverture maximum, dans laquelle l'extrémité 46 de son nez se trouve au seuil du rétrécissement 33. La section d'ouverture est alors quasiment définie par le rétrécissement 33 seul. La durée de cette phase, égale à la durée de stationnement du pointeau 40, est en l'espèce de 14 s.

### Etape C : descente en débit

En fin de remplissage, la vanne doit être refermée pour revenir du débit nominal au débit nul, autant que possible avec précision et toujours sans dégrader la matière. Cette descente en débit, comme la montée, se divise ici en trois phases : une phase de descente principale en débit C1, une phase de palier de fin de remplissage bas débit C22 et une phase de descente finale en débit C23.

### Phase C1 : descente principale en débit

On amorce la fermeture de la vanne par une première descente en débit, appelée descente principale et notée C1 à la figure 7, au cours de laquelle le débit redescend du débit nominal Dn à un débit de fin de remplissage Df prédéterminé. Dans l'exemple donné à la figure 7, le débit de fin de remplissage Df est de 3 g/min, si bien que le débit passe alors de 60 g/min à 3 g/min. En l'espèce, la durée de cette descente principale en débit est de 1 s et la courbe de débit au cours de cette phase est quasiment linéaire. La vitesse de descente en débit (dérivée première du débit par rapport au temps, correspondant à la pente de la courbe de débit) au cours de cette phase est donc de 3000 g.min⁻². De manière générale, quelle que soit l'allure de la courbe de descente principale en débit, on pourra envisager des vitesses de descente en débit comprises entre 2000 et 7000 g.min⁻².

En pratique, au cours de cette phase, le pointeau 40 est tiré par la tige 51 du vérin 50, à partir de sa position de pleine ouverture en direction de sa position de fermeture, jusqu'à une position d'ouverture partielle correspondant au débit de fin de remplissage Df voulu. La section d'ouverture et donc le débit varient, tout au long de cette phase, suivant une loi définie par la variation de position linéaire du pointeau en relation avec la forme du profil du nez 42 du pointeau 40.

### Phase C22 : palier de fin de remplissage bas débit

Le débit de matière atteint ensuite un palier avec la phase de fin de remplissage bas débit, notée C22 à la figure 7, au cours de laquelle le débit de fin de remplissage Df est maintenu constant pendant une durée prédéterminée de quelques secondes. On permet ainsi à l'air restant dans le haut du moule en fin de remplissage de s'évacuer complètement. On peut en outre de la sorte obtenir une fermeture précise et propre, sans débordement.

A cet effet, le pointeau 40 de la vanne est maintenu immobile dans sa position de faible ouverture définissant le débit de fin de remplissage. La section d'ouverture est alors constante.

Le débit de fin de remplissage Df est très sensiblement inférieur au débit nominal Dn. Pour éviter toute turbulence ou emprisonnement d'air, il est préférable que le débit de fin de remplissage Df reste inférieur à 20 g/min. En pratique, ce débit de fin de remplissage Df pourra être compris entre 3 et 8 g/min. Dans l'exemple envisagé à la figure 7, il est de 3 g/min.

La phase de fin de remplissage bas débit est de préférence plus longue que la phase de descente principale en débit C1 définie ci-dessous. En pratique on pourra avantageusement prévoir une durée située entre 2 et 8 secondes. Dans l'exemple illustré par la figure 7, la phase C22 dure 5 s.

### Phase C23 : descente finale en débit

Enfin, le remplissage est stoppé par la fermeture complète de la vanne qui permet passer du débit de fin de remplissage Df au débit nul. C'est la seconde descente en débit ou descente finale. L'épaulement 43 du pointeau 40 est repoussé par la tige du vérin en position de fermeture complète, en butée contre le décrochement 34.

La fermeture de la vanne marque la fin de la séquence de remplissage.

L'initialisation de la polymérisation est assurée après le remplissage. Plus précisément, il est avantageusement possible, grâce à l'invention, d'assurer l'initialisation de la polymérisation immédiatement après le remplissage, c'est-à-dire en pratique dans un délai inférieur à 5 s, au bénéfice de la productivité, et, la matière à mouler restant homogène lors du remplissage, les lentilles optiques obtenues sont avantageusement dépourvues de défaut optique susceptible de conduire à leur rebut, au bénéfice du coût global.

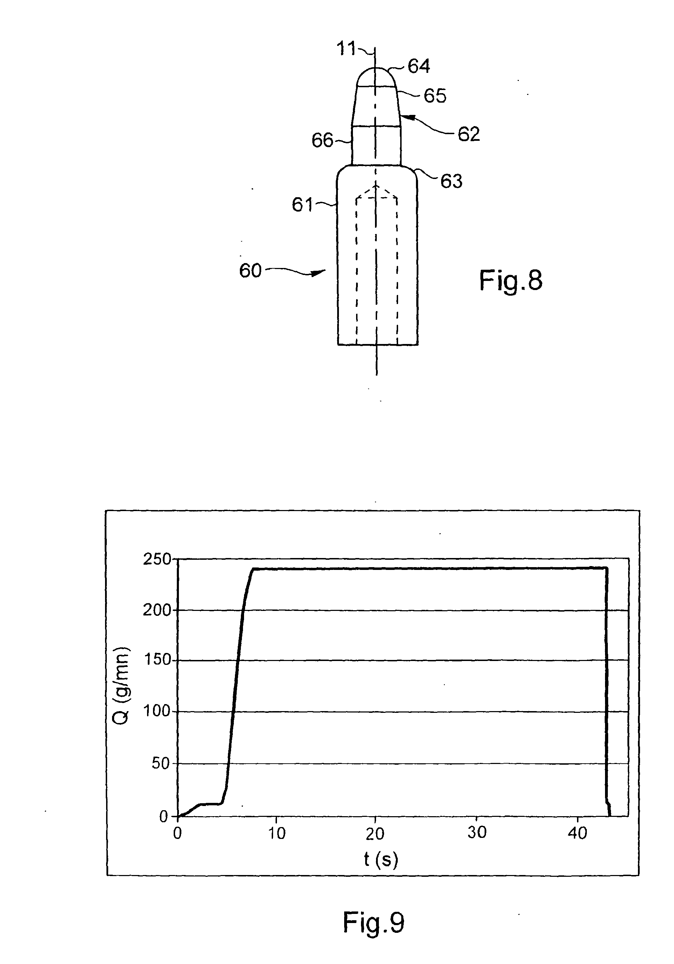

La figure 8 illustre plus précisément une variante de réalisation de ce type. Sur cette figure, on a représenté isolément un pointeau 60 destiné à être intégré à une vanne par ailleurs analogue à la vanne 18 précédemment décrite en référence aux figures 2 à 5, avec par exemple un corps de vanne 25 d'axe 11 identique. Ce pointeau 60 de révolution suivant l'axe 11, possède, de manière analogue au pointeau 40 des figures 2 à 5, une embase allongée cylindrique 61, un nez 62 et, entre l'embase 61 et le nez 62, un épaulement torique 63. L'embase 61 et l'épaulement 63 sont identiques à l'embase 41 et à l'épaulement 43 du pointeau 40. Le nez 62 possède quant à lui, outre une extrémité sphérique 64, deux tronçons : un tronçon conique 65 dont le petit diamètre se raccorde sans discontinuité à l'extrémité sphérique 64 et un tronçon cylindrique 66 qui est adjacent à l'épaulement 63 et qui se raccorde sans discontinuité au grand diamètre du tronçon conique 65.

Typiquement, ce type de pointeau à tronçons est destiné à être utilisé en coopération avec un vérin à commande de vitesse et est monté dans une vanne par ailleurs analogue à la vanne 18 des figures 2 à 5.

Lorsque le vérin est du type à commande de vitesse, il permet, à l'aide d'une unité de commande associée classique (non représentée), de contrôler avec précision la vitesse de déplacement linéaire de la tige 51 et du pointeau 40 le long de l'axe 11. Il s'agit typiquement d'un vérin hydraulique ou pneumatique tel que celui commercialisé par la société SMC sous la marque SMC® et portant la référence CDQ2B25-10D.

On utilisera une telle commande en vitesse du pointeau pour piloter des séquences de remplissage simples et figées, avec des phases d'ouverture et de fermeture constantes d'un cycle de remplissage à l'autre et figées par le matériel. On comprend en effet que dans ce cas, seule la vitesse (et non la position) du pointeau étant pilotée, le nez 62 du pointeau 60 agit, par analogie avec le domaine de la mécanique, à la façon d'une "came hydraulique" pour réaliser les phases d'ouverture et de fermeture qui résultent de la forme de son profil.

A cet égard, la forme du nez de pointeau illustrée par la figure 8 n'est pas limitative ; on pourra bien entendu prévoir d'autres formes de nez (par exemple avec plusieurs tronçons coniques de pentes différentes, ou à profil courbe continu au second ordre) engendrant une fonction de variation de débit d'un type différent de celui illustré par la figure 9 et décrit ci-dessous.

Il sera par ailleurs possible d'ajuster la vitesse de déplacement du pointeau à la demande, notamment en prévoyant des vitesses différentes lors de l'ouverture d'une part et de la fermeture d'autre part.

En service, le pointeau est actionné en translation par le vérin, à vitesse constante ou au moins déterminée suivant l'axe 11, de sorte que son nez défile dans le rétrécissement 33 en s'engageant dans ou se dégageant de celui-ci progressivement. En raison du caractère non uniforme de la section du nez le long de l'axe axe 11 (fonction de "came hydraulique"), il résulte de ce déplacement du nez, une variation de la section d'écoulement et donc de débit correspondant au profil du nez.

Dans l'exemple illustré, les trois tronçons du pointeau génèrent une séquence de remplissage telle que celle représentée à la figure 9. Il s'agit en l'espèce du remplissage par le bas ou par le haut de la cavité de moulage en vue du moulage d'une lentille semi-finie, une telle lentille étant nécessairement plus épaisse qu'une lentille finie. Cette séquence, obtenue avec une pression d'alimentation de 0,3 bar et une matière ayant une viscosité de 200 cps, comporte trois étapes principales : une étape de montée en débit A', une étape de remplissage plein débit B' et une étape de descente en débit C'. L'étape de montée en débit A' et l'étape de descente en débit C' se divisent chacune en deux phases, tandis que l'étape de remplissage plein débit est monotone, comme exposé en détail ci-dessous.

### Etape A' : montée en débit

La séquence de remplissage débute par l'ouverture de la vanne engendrant une montée en débit. Le pointeau 60 est tiré par le vérin à partir de sa position initiale de fermeture dans laquelle l'épaulement 63 est en appui contre le décrochement 34 de la première branche du canal d'écoulement 30, vers sa position d'ouverture, à une vitesse constante de 1,25 mm/s. Du fait de la forme du nez de pointeau qui exerce sa fonction de "came hydraulique", l'ouverture se divise en trois phases : une phase de première montée en débit A1', une phase de début de remplissage bas débit A2' et une phase de seconde montée en débit A3'.

### Phase A1' : première montée en débit

On débute par la phase de première montée en débit notée A1' à la figure 9 au cours de laquelle le débit passe de sa valeur initiale nulle à une valeur prédéterminée relativement faible appelée débit de début de remplissage Dd'. Le remplissage débute dès que le pointeau quitte sa position de fermeture. Le pointeau 60, tiré par le vérin, s'écarte progressivement de sa position initiale de fermeture pour ménager, entre son épaulement 63 et le décrochement 34 de la première branche du canal d'écoulement 30, une ouverture de section croissante. Il en résulte une augmentation du débit, comme cela ressort de la figure 9.

Dans l'exemple donné à la figure 9, le débit Dd' est de 10 g/min et la phase de première montée en débit dure 2,5 s. La courbe de débit au cours de cette phase est quasiment linéaire. D'autres allures de courbe de montée en débit pourront être prévues pour cette phase, avec notamment une continuité de débit au second ordre par rapport au temps en début et en fin de phase. Il suffira pour cela d'ajuster la forme du nez 42 pointeau au voisinage de l'épaulement 63 en ménageant par exemple un autre tronçon conique.

### Phase A2' : début de remplissage bas débit

Lorsque la section d'ouverture définie entre l'épaulement 63 et le décrochement 34 atteint la valeur de celle définie entre le tronçon cylindrique 66 du nez 62 du pointeau 60 et le rétrécissement 33, le débit cesse d'augmenter et atteint un palier. C'est la phase de début de remplissage bas débit, notée A2' à la figure 9. La section d'ouverture utile (c'est-à-dire celle qui impose le débit) est alors stable et exclusivement définie par le tronçon cylindrique 66 du nez 62 du pointeau 60 en coopération avec le rétrécissement 33. Dans l'exemple donné à la figure 9, le débit est alors de 10 g/min. La durée de cette phase, naturellement liée à la longueur du tronçon 66 et à la vitesse de déplacement du pointeau 60, est en l'espèce de 2,5 s.

### Phase A3' : seconde montée en débit

Lorsque la section de démarcation entre le tronçon cylindrique 66 et le tronçon conique 65 du nez 62 parvient au seuil du rétrécissement 33, on amorce la phase de montée en débit, notée M' à la figure 9. Au cours de cette phase, le pointeau 60 est toujours tiré par le vérin à la même vitesse, jusqu'à sa position d'ouverture maximum dans laquelle le débit atteint sa valeur nominale Dn'. La section d'ouverture, tout au long de cette seconde phase, varie suivant une loi définie par le tronçon conique 65 du nez 62 du pointeau 60 en coopération avec le rétrécissement 33.

Le fait que la courbe de débit au cours de cette phase soit quasiment linéaire résulte de la forme conique du nez du pointeau. La durée et la vitesse de montée en débit de cette phase sont liées à la longueur et à l'angle au sommet du nez conique 42 et à la vitesse de déplacement du pointeau 40. On pourra bien entendu adopter d'autres formes de nez de pointeau pour obtenir d'autre courbe de montée en débit, avec notamment un tronçon de profil courbé.

Dans l'exemple illustré par la figure 9, le débit nominal Dn' est de 240 g/min. La durée de cette seconde montée en débit est de 3 s.

### Etape B' : remplissage plein débit

Le pointeau s'arrête en butée lorsqu'il parvient en position d'ouverture maximum dans laquelle l'extrémité 64 de son nez se trouve au seuil du rétrécissement 33. Le débit est alors maximum et correspond au débit nominal Dn' précité. Débute alors l'étape de remplissage à plein débit, notée B' à la figure 9. Le pointeau 60 est maintenu immobile dans sa position d'ouverture maximum. La section d'ouverture est alors quasiment définie par le rétrécissement 33 seul. Dans l'exemple donné à la figure 9, le débit est alors de 240 g/min. La durée de cette phase, liée à la durée de stationnement du pointeau 60, est en l'espèce de 3,5 s.

### Etape C' : descente en débit

En fin de remplissage, la cavité de moulage étant remplie, la vanne doit être refermée pour couper le débit de matière. Le pointeau 60 est repoussé par le vérin à partir de sa position de pleine ouverture en direction de sa position de fermeture, à une vitesse constante de 20 mm/s qui est donc très sensiblement supérieure à la vitesse de déplacement du pointeau lors de l'étape de montée en débit A'. La fermeture de la vanne, comme l'ouverture (bien que de manière beaucoup plus rapide et donc moins distinctement perceptible), se divise en trois phases : une phase de première descente en débit, une phase de fin de remplissage bas débit et une phase de seconde descente en débit.

Ces trois phases sont analogues à leurs homologues de l'étape C du premier mode de réalisation précédemment décrit en référence à la figure 7. Elles résultent toutefois ici du découpage en tronçons du nez 62 du pointeau qui exerce sa fonction de "came hydraulique" dans le sens inverse de la montée en débit A', symétriquement.

Nous ne détaillerons pas chacune de ces trois phases de l'étape de descente en débit C', dans la mesure où, en l'espèce, la vitesse de fermeture du pointeau au cours de cette étape est trop rapide pour que soient perceptibles ces différentes phases. En pratique, on peut même considérer l'étape C comme quasi monolithique avec une descente de débit quasi-linéaire très rapide.

## Revendications

1. Vanne à pointeau pour le remplissage d'un moule avec une matière organique à l'état liquide comportant :
- un corps (25) dans lequel est ménagé un canal d'écoulement (30) de la matière à mouler, présentant une ouverture d'entrée (31), une ouverture de sortie (32) et, entre ces deux ouvertures, un rétrécissement (33) bordé en amont par un décrochement (34) formant siège, et
- un pointeau (40) monté dans le corps (25) pour être mobile entre une position de pleine ouverture et une position de fermeture du canal d'écoulement (30), avec, entre ces deux positions extrêmes, une plage de positions intermédiaires d'ouverture variable, ledit pointeau possédant un épaulement de fermeture (43) agencé pour prendre appui, en position de fermeture, contre le siège formé par le décrochement (34) du canal d'écoulement (30) dans le corps (25), de manière à obturer le canal d'écoulement (30) **caractérisé en ce que** ledit pointeau possède, en saillie de cet épaulement de fermeture, un nez (42) de réglage d'ouverture qui présente une section non uniforme et qui est engagé dans le rétrécissement (33) pour définir avec celui-ci, dans chaque position intermédiaire du pointeau (40), une certaine section d'écoulement.

2. Vanne selon la revendication 1, dans laquelle l'épaulement de fermeture (43) du pointeau (40) est émoussé.

3. Vanne selon la revendication précédente, dans laquelle le décrochement (34) du canal d'écoulement (30) est conique.

4. Vanne selon la revendication précédente, dans laquelle le décrochement conique (34) possède un angle au sommet compris entre 30 et 60 degrés.

5. Vanne selon l'une des revendications précédentes, dans laquelle le nez (40) possède une extrémité libre émoussée (46).

6. Vanne selon la revendication précédente, dans laquelle l'extrémité libre (46) du nez est sphérique.

7. Vanne selon l'une des revendications précédentes, dans laquelle, en position d'ouverture maximum, l'extrémité libre (46) du nez (42) est au moins partiellement engagée dans le rétrécissement (33) du canal d'écoulement (30).

8. Vanne selon l'une des revendications précédentes, dans laquelle le nez (40) possède au moins un tronçon de forme conique.

9. Vanne selon l'une des revendications précédentes, dans laquelle le nez possède plusieurs tronçons de formes distinctes, sans discontinuité au premier ordre entre ces différents tronçons.

10. Vanne selon les revendications 8 et 9, dans laquelle le nez possède au moins, outre son tronçon conique, un tronçon cylindrique.

11. Vanne selon l'une des revendications précédentes, dans laquelle au moins la partie de la surface extérieure du pointeau (40) qui est amenée à être plongée dans le canal d'écoulement (30) est en Polytetrafluoroéthylène.

12. Vanne selon l'une des revendications précédentes, dans laquelle la surface intérieure du canal d'écoulement (30) du corps (25) est en Polytetrafluoroéthylène.

13. Vanne selon l'une des revendications précédentes, dans laquelle le pointeau (40) présente un axe de symétrie de révolution (11) et est monté dans le corps (25) pour coulisser suivant son axe qui se confond avec l'axe du rétrécissement (33) du canal d'écoulement (30) du corps (25).

14. Vanne selon la revendication précédente, dans laquelle un joint torique d'étanchéité (44) en un élastomère du type Ethylène-Propylène-Diène est monté entre le corps (25) et le pointeau (40).

15. Vanne selon l'une des revendications précédentes, dans laquelle le rétrécissement (33) du canal d'écoulement (30) se prolonge à section constante en forme et en dimension jusqu'à l'orifice de sortie (32).

16. Vanne selon l'une des revendications précédentes, dans laquelle le canal d'écoulement (30) présente une forme de L, avec une première branche de révolution autour de l'axe d'écoulement (11) et dont l'extrémité libre constitue l'ouverture de sortie (32), et une seconde branche de révolution autour d'un axe (35) perpendiculaire à l'axe d'écoulement (11).

17. Vanne selon la revendication précédente, dans laquelle la première branche du canal (30) est étagée, avec une base large (36) et, en extrémité, le rétrécissement (33) suivi de l'ouverture de sortie (32), la base (36) et le rétrécissement (33) étant cylindriques et le décrochement (34) se raccordant au rétrécissement (33) et à la base (36) par des zones de liaison émoussées.

18. Procédé de moulage d'un élément optique en matière organique dans une cavité de moulage (6) appropriée, comportant une séquence de remplissage de la cavité de moulage avec de la matière organique à l'état liquide et une étape de polymérisation de la matière dans ladite cavité de moulage, **caractérisé en ce que** la séquence de remplissage de la cavité de moulage (6) s'opère au moyen d'une vanne (15) selon l'une des revendications précédentes.

19. Procédé selon la revendication précédente, dans lequel le pointeau (40) est commandé en position.

20. Procédé selon la revendication 18, dans lequel le pointeau (60) est commandé en vitesse.

21. Procédé selon la revendication précédente, dans lequel le pointeau est actionné à des vitesses différentes lors de l'ouverture et lors de la fermeture.

22. Procédé selon la revendication précédente, dans lequel le pointeau est déplacé lors de la fermeture à une vitesse supérieure à celle à laquelle il est déplacé lors de l'ouverture.

23. Procédé selon l'une des revendications 18 à 22, dans lequel la séquence de remplissage comporte les étapes suivantes :
- montée en débit (A), pour passer d'un débit nul à un débit nominal (Dn) supérieur à 40 g/min,
- remplissage plein débit (B), avec maintien du débit nominal (Dn),
- descente en débit (C), pour revenir du débit nominal (Dn) au débit nul,
- **caractérisé en ce que** l'étape de montée en débit (A) se décompose en au moins deux phases :
- début de remplissage (A1) à bas débit, jusqu'au remplissage du moule à une hauteur de matière d'au moins 2 mm au point le plus profond du moule, le débit étant au cours de cette phase croissant pour atteindre un maximum, dit débit de début de remplissage (Dd), inférieur à 20 g/min, puis
- montée principale en débit (A2) pour passer du débit de début de remplissage (Dd) au débit nominal (Dn).

24. Procédé selon l'une des revendications 18 à 23, dans lequel la matière est introduite dans la cavité de moulage (6) par un orifice (9) situé en partie basse de ladite cavité.

25. Procédé selon l'une des revendications 18 à 24, dans lequel la polymérisation de la matière est initiée immédiatement après le remplissage complet de la cavité de moulage.

## Claims

1. Needle valve for filling a mold with an organic material in the liquid state, said valve including:
- a body (25) in which is formed a flow passage (30) for the material to be molded having an inlet opening (31), an outlet opening (32) and, between said two openings, a constriction (33) bounded on its upstream side by a change of section (34) forming a seat, and
- a needle (40) mounted in the body (25) so that it is mobile between a fully open position and a closure position of the flow passage (30) with, between these two extreme positions, a range of intermediate positions of variable opening, said needle having a closure shoulder (43) adapted to bear in the closure position against the seat formed by the change of section (34) in the flow passage (30) in the body (25), so as to shut off the flow passage (30) **characterized in that** said needle has, projecting from said closure shoulder, an opening adjustment tip (42) that has a nonuniform section and is engaged in the constriction (33) to define a certain flow section therewith in each intermediate position of the needle (40).

2. Valve according to Claim 1, wherein the closure shoulder (43) of the needle (40) is rounded.

3. Valve according to the preceding claim, wherein the change of section (34) of the flow passage (30) is conical.

4. Valve according to the preceding claim, wherein the conical change of section (34) has an angle at the apex from 30 to 60°.

5. Valve according to any preceding claim, wherein the tip (40) has a rounded free end (46).

6. Valve according to the preceding claim, wherein the free end (46) of the tip is spherical.

7. Valve according to any preceding claim, wherein, in the maximum open position, the free end (46) of the tip (42) is at least partially engaged in the constriction (33) of the flow passage (30).

8. Valve according to any preceding claim, wherein the tip (40) has at least one conical portion.

9. Valve according to any preceding claim, wherein the tip has a plurality of portions of different shape with no first order discontinuity between these different portions.

10. Valve according to Claims 8 and 9, wherein the tip has at least one cylindrical portion in addition to its conical portion.

11. Valve according to any preceding claim, wherein at least the portion of the external surface of the needle (40) that is caused to be immersed in the flow passage (30) consists of PTFE.

12. Valve according to any preceding claim, wherein the inside surface of the flow passage (30) of the body (25) consists of PTFE.

13. Valve according to any preceding claim, wherein the needle (40) has an axis (11) of rotational symmetry and is mounted in the body (25) to slide along its axis, which coincides with the axis of the constriction (33) in the flow passage (30) of the body (25).

14. Valve according to the preceding claim, wherein an ethylene-propylene-diene elastomer 0-ring seal (44) is mounted between the body (25) and the needle (40).

15. Valve according to any preceding claim, wherein the constriction (33) in the flow passage (30) is extended with a constant shape and size of section as far as the outlet orifice (32).

16. Valve according to any preceding claim, wherein the flow passage (30) is L-shaped, with a first branch centered on the flow axis (11) and whose free end constitutes the outlet opening (32) and a second branch centered on an axis (35) perpendicular to the flow axis (11) .

17. Valve according to the preceding claim, wherein the first branch of the passage (30) is staggered, with a large base (36) and, at the end, the constriction (33) followed by the outlet opening (32), the base (36) and the constriction (33) being cylindrical and the change of section (34) merging with the constriction (33) and the base (36) via rounded connecting areas.

18. Method of molding an organic material optical component in an appropriate molding cavity (6), the method including a sequence of filling the molding cavity with the organic material in the liquid state and a step of polymerizing the material in said molding cavity, which method is **characterized in that** the molding cavity (6) filling sequence is effected by means of a valve (15) according to any preceding claim.

19. Method according to the preceding claim wherein the position of the needle (40) is controlled.

20. Method according to Claim 18 wherein the speed of the needle (60) is controlled.

21. Method according to the preceding claim wherein the needle is operated at different speeds during opening and during closing.

22. Method according to the preceding claim wherein the needle is moved during closing at a speed higher than that at which it is moved during opening.

23. Method according to any of Claims 18 to 22, wherein the filling sequence includes the following steps:
- rise in flowrate (A) from a zero flowrate to a nominal flowrate (Dn) greater than 40 g/min,
- full flowrate filling (B), with the nominal flowrate (Dn) maintained, and
- flowrate reduction (C) from the nominal flowrate (Dn) to the zero flowrate,
which method is **characterized in that** the rise in flowrate step (A) is divided into at least two phases:
- a low flowrate start of filling phase (A1), which continues until the mold is filled with the material to a height of at least 2 mm at the deepest point of the mold, the flowrate increasing during this phase to a maximum start of filling flowrate (Dd) less than 20 g/min, and then
- a main rise in flowrate phase (A2) to increase from the start of filling flowrate (Dd) to the nominal flowrate (Dn).

24. Method according to any of Claims 18 to 23, wherein the material is introduced into the molding cavity (6) via an orifice (9) in the lower portion of said cavity.

25. Method according to any of Claims 18 to 24, wherein polymerization of the material is initiated immediately after complete filling of the molding cavity.

## Patentansprüche

1. Schieberventil zum Befüllen einer Gussform mit einem organischen Material in flüssigem Zustand, umfassend:
- einen Körper (25), in dem sich ein Strömungskanal (30) für das zu gießende Material befindet, mit einer Eingangsöffnung (31), einer Ausgangsöffnung (32) und, zwischen diesen zwei Öffnungen, einer Verengung (33), an die flussaufwärtsliegend eine einen Sitz bildende Verjüngung (34) angrenzt, und
- einen Schieber (40), in dem Körper (25) bewegbar zwischen einer voll geöffneten Position und einer geschlossenen Position des Strömungskanals (30) angebracht, mit einem Zwischenbereich von Positionen variabler Öffnung zwischen diesen beiden Extrempositionen, wobei der Schieber (40) eine Schließschulter (43) aufweist, so ausgebildet, dass sie in der geschlossenen Position gegen die den Sitz formende Verjüngung (34) des Strömungskanals (30) im Körper (25) anliegt, so dass der Strömungskanal (34) gesperrt ist,
**dadurch gekennzeichnet, dass**
der Schieber (40) vorspringend von der Schließschulter eine Öffnungs-Steuer-Nase (42) umfasst, die einen ungleichförmigen Schnitt aufweist und die so mit der Verengung (33) in Eingriff steht, dass sie mit dieser in jeder Zwischenposition des Schiebers (40) einen bestimmten Strömungsquerschnitt definiert.

2. Ventil gemäß Anspruch 1, bei welchem die Schließschulter (43) des Schiebers (40) stumpf/abgerundet ist.

3. Ventil gemäß dem vorangehenden Anspruch, bei welchem die Verjüngung (34) des Strömungskanals (30) konisch ist.

4. Ventil gemäß dem vorangehenden Anspruch, bei welchem die konische Verjüngung (34) einen Winkel am Scheitel zwischen 30 und 60 Grad aufweist.

5. Ventil gemäß einem der vorangehenden Ansprüche, bei welchem die Nase (40) ein freies, abgerundetes Ende (46) aufweist.

6. Ventil gemäß dem vorangehenden Anspruch, bei welchem das freie Ende der Nase (40) sphärisch ist.

7. Ventil gemäß einem der vorangehenden Ansprüche, bei welchem in maximal geöffneter Position das freie Ende (46) der Nase (42) zumindest teilweise mit der Verengung (33) des Strömungskanals (30) in Eingriff steht.

8. Ventil gemäß einem der vorangehenden Ansprüche, bei welchem die Nase (42) zumindest einen Abschnitt konischer Form aufweist.

9. Ventil gemäß einem der vorangehenden Ansprüche, bei welchem die Nase mehrere Abschnitte bestimmter Form aufweist, ohne Unstetigkeit erster Ordnung zwischen den verschiedenen Abschnitten.

10. Ventil gemäß Anspruch 8 oder 9, bei welchem die Nase zusätzlich zu ihrem konischen Abschnitt zumindest einen zylindrischen Abschnitt aufweist.

11. Ventil gemäß einem der vorangehenden Ansprüche, bei welchem zumindest der Teil der Außenfläche des Schiebers (40), der in den Strömungskanal (30) eingebracht wird, in Polytetrafluorethylen ausgeführt ist.

12. Ventil gemäß einem der vorangehenden Ansprüche, bei welchem die Innenfläche des Strömungskanals (30) des Körpers (25) aus Polytetrafluorethylen ist.

13. Ventil gemäß einem der vorangehenden Ansprüche, bei welchem der Schieber (40) eine Rotations-Symmetrieachse (11) aufweist, und so in dem Körper (25) angeordnet ist, dass er entlang seiner Achse, die mit der Achse der Verengung (33) des Strömungskanals (30) des Körpers (25) zusammenfällt, verschiebbar ist.

14. Ventil gemäß dem vorangehenden Anspruch, bei welchem eine ringförmige Abdichtung(44) aus einem Elastomer vom Typ Ethylen-Propylen-Dien zwischen dem Körper (25) und dem Schieber (40) angeordnet ist.

15. Ventil gemäß einem der vorangehenden Ansprüche, bei welchem die Verengung (33) des Strömungskanals (30) mit einem Schnitt von konstanter Form und Dimension bis zu der Ausgangsöffnung (32) fortgeführt ist.

16. Ventil gemäß einem der vorangehenden Ansprüche, bei welchem der Strömungskanal (30) eine L-Form aufweist, mit einem ersten Arm, rotationskörperartig bezüglich der Strömungsachse (11), wobei das freie Ende davon die Ausgangsöffnung (32) bildet, und einem zweiten Arm rotationskörperartig bezüglich einer Achse (35), senkrecht zur Strömungsachse (11).

17. Ventil gemäß dem vorangehenden Anspruch, bei welchem der erste Arm des Kanals (30) abgestuft ist, mit einer weiten Basis (36) und am Ende, der Verengung (33), gefolgt von der Ausgangsöffnung (32), wobei die Basis (36) und die Verengung (33) zylindrisch sind und sich die Verjüngung (34) an die Verengung (33) und die Basis (36) mit abgerundeten Verbindungszonen anschließt.

18. Verfahren zum Gießen eines optischen Elementes aus organischem Material in einen geeigneten Formhohlraum (6), umfassend eine Sequenz des Befüllens des Formhohlraum mit dem organischen Material in flüssigem Zustand und einen Schritt der Polymerisation des Materials in dem Formhohlraum, **dadurch gekennzeichnet, dass** die Sequenz des Befüllens des Formhohlraumes (6) mittels eines Ventils (15) gemäß einem der vorangehenden Ansprüche vorgenommen wird.

19. Verfahren gemäß dem vorangehenden Anspruch, bei welchem die Position des Schiebers (40) gesteuert wird.

20. Verfahren gemäß Anspruch 18, bei welchem die Geschwindigkeit des Schiebers (60) gesteuert wird.

21. Verfahren gemäß dem vorangehenden Anspruch, bei welchem der Schieber mit verschiedenen Geschwindigkeiten zum Öffnen und zum Schließen bewegt wird.

22. Verfahren gemäß dem vorangehenden Anspruch, bei welchem der Schieber beim Schließen mit einer höheren Geschwindigkeit bewegt wird als beim Öffnen.

23. Verfahren gemäß einem der Ansprüche 18 bis 22, bei welchem die Sequenz des Befiillens die folgenden Schritte umfasst:
- Steigern des Durchflusses (A), um von einem Durchfluss null auf einen nominalen Durchfluss von mehr als 40 g/min zu kommen,
- befüllen mit vollem Durchfluss (B), unter Beibehaltung des nominalen Durchflusses (Dn),
- verringern des Durchflusses (C), um von dem nominalen Durchfluss (Dn) auf einen Nulldurchfluss zurückzukehren,
- **dadurch gekennzeichnet, dass** der Schritt des Steigerns des Durchflusses (A) aus mindestens zwei Phasen besteht:
- Beginn des Auffüllens (A1) mit geringem Durchfluss, bis zu einer Befüllung des Formhohlraumes mit einer Materialhöhe von mindestens 2 mm über dem tiefsten Punkt des Formhohlraumes, wobei der Durchfluss im Verlauf dieser Phase bis zu einem maximalen Durchfluss des Befiillungsbeginns (Dd) von weniger als 20 g/min ansteigt, und danach
- Hauptanstieg des Durchflusses (A2), um von dem Durchfluss des Befiillungsbeginns (Dd) auf den nominalen Durchfluss zu kommen.

24. Verfahren gemäß einem der Ansprüche 18 bis 23, bei welchem das Material über eine Öffnung (9), befindlich im unteren Teil des Formhohlraumes, in den Formhohlraum (6) eingebracht wird.

25. Verfahren gemäß einem der Ansprüche 18 bis 24, bei welchem die Polymerisation des Materials unmittelbar nach dem vollständigen Befüllen des Formhohlraumes initiiert wird.
